# EUROPEAN PATENT APPLICATION

(11) **EP 4 475 287 A1**
(43) Date of publication of application: **11.12.2024**
(21) Application number: 24173436.7
(22) Date of filing: 30.04.2024
(51) Int. Cl.: H01M 50/103, H01M 50/176, H01M 50/188, H01M 50/548, H01M 50/553, H01M 50/562, H01M 50/566, H01M 50/533, H01M 50/534

(54) **SECONDARY BATTERY AND METHOD OF MANUFACTURING SECONDARY BATTERY**

(30) Priority: 08.06.2023 JP 2023094761
(71) Applicant: Prime Planet Energy & Solutions, Inc., Chuo-ku Tokyo 103-0022 (JP)
(72) Inventor: WAKIMOTO, Ryoichi, Tokyo, 103-0022 (JP); IMANISHI, Hiroaki, Tokyo, 103-0022 (JP)
(74) Representative: Kuhnen & Wacker Patent- und Rechtsanwaltsbüro PartG mbB

(57) **Abstract**

In this secondary battery (1), a first resin member (161) is disposed between a negative electrode terminal (131) and a first sealing plate (121), the negative electrode terminal (131) and a negative electrode current collector (310) are connected to each other by a welding portion (L1), the welding portion (L1) extends through the negative electrode terminal (131), and the welding portion (L1) is provided in the negative electrode terminal (131) on an outer side with respect to the negative electrode current collector (310). With this configuration, the negative electrode terminal (131) and a negative electrode tab group (210A) can be electrically joined to each other with an electrode assembly (200) being disposed in a case main body (110). As a result, a secondary battery having a higher volume energy density can be manufactured efficiently.

## Description

### CROSS REFERENCE TO RELATED APPLICATIONS

This nonprovisional application is based on Japanese Patent Application No. 2023-094761 filed on June 8, 2023 with the Japan Patent Office, the entire contents of which are hereby incorporated by reference.

### BACKGROUND OF THE INVENTION

### Field of the Invention

The present technology relates to a secondary battery and a method of manufacturing the secondary battery.

### Description of the Background Art

Japanese Patent No. 4537353 discloses a prismatic secondary battery in which an electrode group (25) is accommodated in a battery case (14) provided with openings (14a, 14b) at both ends thereof and electrode terminals (21, 23) are respectively attached to cap plates (33, 33') that seal the openings (14a, 14b).

### SUMMARY OF THE INVENTION

When a prismatic battery is configured such that a positive electrode terminal is provided on a side surface on one side and a negative electrode terminal is provided at an end portion on the other side in the battery case, a battery assembly can be likely to have a low height. However, there is room for further improvement in order to obtain a secondary battery that has a higher volume energy density and that can be manufactured efficiently and stably.

It is an object of the present technology to provide a secondary battery that can be efficiently and stably manufactured, and a method of manufacturing the secondary battery.

The present technology provides the following secondary battery and the following method of manufacturing the secondary battery.
[1] A secondary battery comprising: an electrode assembly including a first electrode and a second electrode having a polarity different from a polarity of the first electrode; and an exterior package that accommodates the electrode assembly and an electrolyte, wherein the exterior package includes a case main body provided with a first opening at one end portion of the exterior package, and a first sealing plate that seals the first opening, the electrode assembly has a first electrode tab group located at one end portion of the electrode assembly and including a plurality of first electrode tabs provided at the first electrode, a first electrode current collector member is connected to the first electrode tab group, a first electrode terminal is connected to the first electrode current collector member, a first resin member is disposed between the first electrode terminal and the first sealing plate, the first electrode terminal and the first electrode current collector member are connected to each other by a welding portion, the welding portion extends through the first electrode terminal, and the welding portion is provided in the first electrode terminal at a region on an outer side with respect to the first electrode current collector member.
[2] The secondary battery according to [1], wherein the first sealing plate and the first resin member are joined to each other.
[3] The secondary battery according to [1]or [2], wherein the first electrode terminal and the first resin member are joined to each other.
[4] The secondary battery according to any one of [1] to [3], wherein the first electrode tab group is connected to the first electrode current collector member with the first electrode tab group being folded, and a joining surface between the first electrode tab group and the first electrode current collector member is disposed in a direction along the first sealing plate.
[5] The secondary battery according to any one of [1] to [4], wherein the first electrode current collector member has a first region and a second region, in a direction perpendicular to the first sealing plate, the first region is disposed at a position close to the electrode assembly with respect to the second region, the first electrode terminal is connected to the first region, and the first electrode tab group is connected to the second region.
[6] The secondary battery according to any one of [1] to [5], wherein the first electrode terminal includes a first metal region composed of a first metal and a second metal region composed of a second metal different from the first metal.
[7] A method of manufacturing a secondary battery, the secondary battery comprising: an electrode assembly including a first electrode and a second electrode having a polarity different from a polarity of the first electrode; and an exterior package that accommodates the electrode assembly and an electrolyte, wherein the exterior package includes a case main body provided with a first opening at one end portion of the exterior package, and a first sealing plate that seals the first opening, the electrode assembly has a first electrode tab group located at one end portion of the electrode assembly and including a plurality of first electrode tabs provided at the first electrode, a first electrode current collector member is connected to the first electrode tab group, a first electrode terminal is connected to the first electrode current collector member, a first resin member is disposed between the first electrode terminal and the first sealing plate, the first electrode terminal and the first electrode current collector member are connected to each other by a welding portion, the welding portion extends through the first electrode terminal, and the welding portion is provided in the first electrode terminal at a region on an outer side with respect to the first electrode current collector member, the method comprising: disposing the electrode assembly in the case main body to close the first opening with the first sealing plate; and welding the first electrode terminal and the first electrode current collector member to which the first electrode tab group is connected, by externally applying an energy ray to the first electrode terminal.
[8] The method of manufacturing the secondary battery according to [7], wherein the welding includes welding the first electrode terminal and the first electrode current collector member by pressing, against the first electrode current collector member, an assembly including the first sealing plate, the first resin member, and the first electrode terminal.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view of a secondary battery.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a perspective view of a first sealing plate.
Fig. 6 is an exploded perspective view of the first sealing plate.
Fig. 7 is a cross sectional view along VII-VII in Fig. 6.
Fig. 8 is a front cross sectional view of the secondary battery shown in Fig. 1. Fig. 9 is a front view showing a negative electrode raw plate before a negative electrode plate is formed.
Fig. 10 is a cross sectional view of the negative electrode raw plate shown in Fig. 9 along X-X.
Fig. 11 is a front view showing the negative electrode plate formed from the negative electrode raw plate.
Fig. 12 is a front view showing a positive electrode raw plate before a positive electrode plate is formed.
Fig. 13 is a cross sectional view of the positive electrode raw plate shown in Fig. 12 along XIII-XIII.
Fig. 14 is a front view showing the positive electrode plate formed from the positive electrode raw plate.
Fig. 15 is a diagram showing an electrode assembly and a current collector each removed from the secondary battery.
Fig. 16 is a diagram showing a connection structure between a negative electrode tab group and a negative electrode current collector.
Fig. 17 is a cross sectional view of the connection structure shown in Fig. 16.
Fig. 18 is a diagram showing a step of inserting the electrode assembly into a case main body.
Fig. 19 is a flowchart showing each step of a method of manufacturing the secondary battery.
Fig. 20 is a schematic diagram showing another embodiment of the secondary battery.
Fig. 21 is a schematic diagram showing another embodiment of the secondary battery.
Fig. 22 is a schematic diagram showing another embodiment of the secondary battery.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium-ion battery. In the present specification, the term "electrode" may collectively represent a positive electrode and a negative electrode. Further, the term "electrode plate" may collectively represent a positive electrode plate and a negative electrode plate.

### (Overall Configuration of Battery)

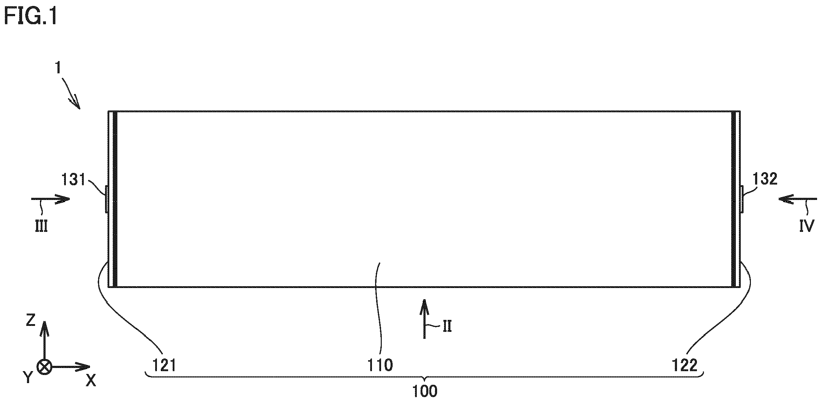

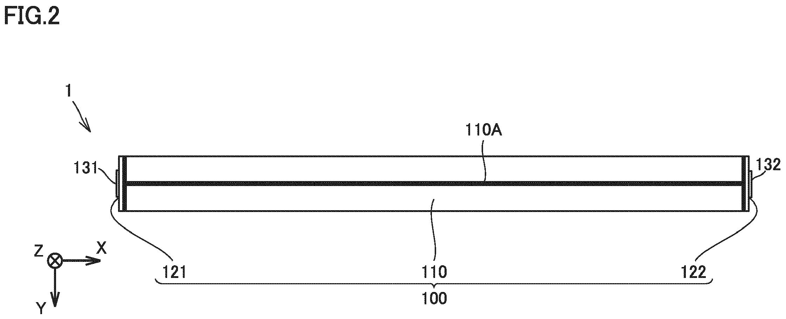

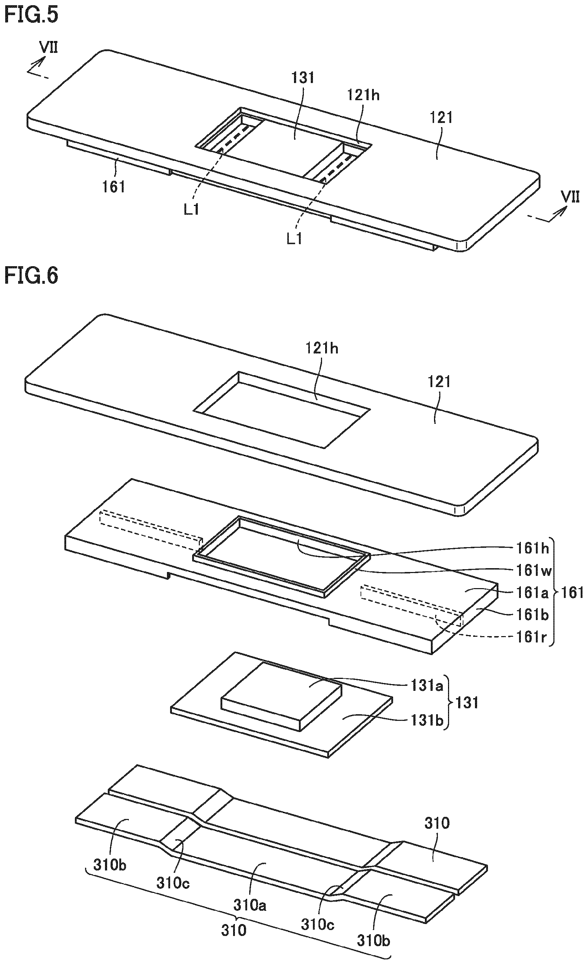

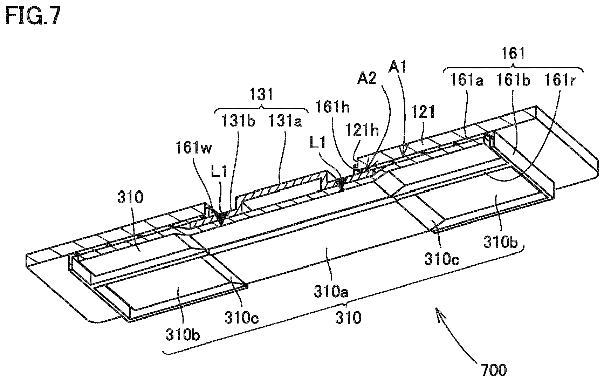

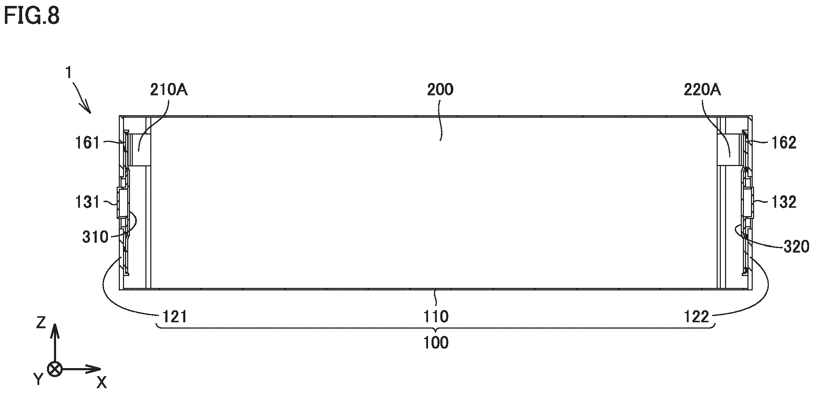

Fig. 1 is a front view of a secondary battery 1 according to the present embodiment. Figs. 2 to 4 show states of secondary battery 1 shown in Fig. 1 when viewed in directions of arrows II, III, and IV, respectively, Fig. 5 is a perspective view of a first sealing plate 121, Fig. 6 is an exploded perspective view of first sealing plate 121, and Fig. 7 is a cross sectional view along VII-VII in Fig. 5. Fig. 8 is a front cross sectional view of secondary battery 1 shown in Fig. 1.

Secondary battery 1 can be mounted on a battery electric vehicle (BEV), a plugin hybrid electric vehicle (PHEV), a hybrid electric vehicle (HEV), or the like. It should be noted that the purpose of use of secondary battery 1 is not limited to the use on a vehicle.

As shown in Figs. 1 to 4, secondary battery 1 includes an exterior package 100, an electrode assembly 200, and current collectors 300. Exterior package 100 includes a case main body 110, first sealing plate 121, and a second sealing plate 122.

In the specification of the present application, an X axis direction (first direction) shown in Figs. 1 to 4 may be referred to as a "width direction" of secondary battery 1 or case main body 110, a Y axis direction (second direction) may be referred to as a "thickness direction" of secondary battery 1 or case main body 110, and a Z axis direction (third direction) may be referred to as a "height direction" of secondary battery 1 or case main body 110. Further, in the description of the present disclosure, it is assumed that the Z axis direction coincides with a direction toward the top and bottom. Therefore, in the secondary battery 1 shown in Fig. 1, the upper side in the figure is vertically upward and the lower side in the figure is vertically downward. Therefore, Fig. 2 shows a state when viewed from the bottom surface.

When forming a battery assembly including secondary battery 1, a plurality of secondary batteries 1 are stacked in the thickness direction of each of the plurality of secondary batteries 1. Secondary batteries 1 stacked may be restrained in the stacking direction (Y axis direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

As shown in Figs. 1 and 2, first sealing plate 121 and second sealing plate 122 are provided at respective end portions of the case main body. Case main body 110 can be formed to have a prismatic tubular shape in, for example, the following manner: end sides of a plate-shaped member having been bent are brought into abutment with each other (joining portion 110A illustrated in Fig. 2) and are joined together (for example, laser welding). Each of the corners of the "prismatic tubular shape" may have a shape with a curvature.

In the present embodiment, case main body 110 is formed to be longer in the width direction (X axis direction) of secondary battery 1 than in each of the thickness direction (Y axis direction) and the height direction (Z axis direction) of secondary battery 1.

The size (width) of case main body 110 in the X axis direction is preferably about 30 cm or more. In this way, secondary battery 1 can be formed to have a relatively large size (high capacity). The size (height) of case main body 110 in the Z axis direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

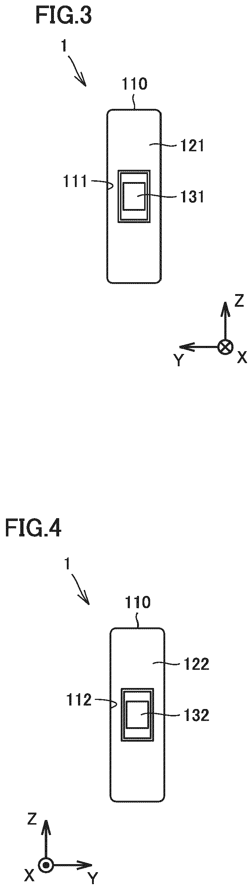

As shown in Fig. 3, a first opening 111 is provided at one end portion of case main body 110. First opening 111 is sealed with first sealing plate 121. First sealing plate 121 is provided with a negative electrode terminal 131 (first electrode terminal). Although not shown, first sealing plate 121 may be appropriately provided with a gas-discharge valve and an injection opening. Each of first opening 111 and first sealing plate 121 has a substantially rectangular shape in which the Y axis direction corresponds to its short-side direction and the Z axis direction corresponds to its long-side direction. Negative electrode terminal 131 may be provided to be flush with first sealing plate 121, or may be provided to protrude slightly with respect to first sealing plate 121 as shown in the figure.

As shown in Fig. 4, a second opening 112 is provided at the other end portion of case main body 110. Second opening 112 is sealed with second sealing plate 122. Second sealing plate 122 is provided with a positive electrode terminal 132 (second electrode terminal). Although not shown, first sealing plate 121 may be appropriately provided with a gas-discharge valve and an injection opening. Each of second opening 112 and second sealing plate 122 has a substantially rectangular shape in which the Y axis direction corresponds to its short-side direction and the Z axis direction corresponds to its long-side direction. Positive electrode terminal 132 may be provided to be flush with second sealing plate 122, or may be provided to protrude slightly with respect to second sealing plate 122 as shown in the figure.

Each of first sealing plate 121 and second sealing plate 122 is composed of a metal. Specifically, each of first sealing plate 121 and second sealing plate 122 is composed of aluminum, an aluminum alloy, iron, an iron alloy, or the like.

Negative electrode terminal 131 is electrically connected to a negative electrode of electrode assembly 200. Positive electrode terminal 132 is electrically connected to a positive electrode of electrode assembly 200.

Negative electrode terminal 131 is composed of a conductive material (more specifically, a metal), and preferably includes a first metal region composed of a first metal and a second metal region composed of a second metal different from the first metal. Thus, reliability of a connection portion thereof to which a component is connected can be improved. For example, the first metal region and a negative electrode current collector 310 described later are preferably composed of the same metal or an alloy thereof.

For example, copper or a copper alloy is preferable as the first metal, aluminum or an aluminum alloy is preferable as the second metal, and copper or a copper alloy is preferable as negative electrode current collector 310. Negative electrode terminal 131 having the two types of metal regions may be formed by using a cladding material or may be formed integrally by using mechanical joining, metal joining, or both of the mechanical joining and the metal joining for individual components composed of the respective metals. The metal joining can be selected from, for example, laser welding, ultrasonic bonding, friction welding, and the like, but the joining method is not limited.

More specifically, as a first example, it is preferable that negative electrode terminal 131 includes a portion composed of copper or a copper alloy and a portion composed of aluminum or an aluminum alloy, negative electrode current collector 310 composed of copper or a copper alloy is connected to the portion of negative electrode terminal 131 composed of copper or a copper alloy, and the portion of negative electrode terminal 131 composed of aluminum or an aluminum alloy is exposed on the outer surface side of first sealing plate 121. As a second example, it is preferable that negative electrode current collector 310 includes a portion composed of copper or a copper alloy and a portion composed of aluminum or an aluminum alloy, negative electrode terminal 131 composed of aluminum or an aluminum alloy is connected to the portion of negative electrode current collector 310 composed of aluminum or an aluminum alloy, and a negative electrode tab group 210A is connected to the portion of negative electrode current collector 310 composed of copper or a copper alloy.

Positive electrode terminal 132 is composed of a conductive material (more specifically, a metal), and can be composed of aluminum, an aluminum alloy, or the like, for example.

The gas-discharge valve is fractured to discharge a gas in exterior package 100 to outside when pressure in exterior package 100 becomes equal to or more than a predetermined value. The injection opening is used as an introduction opening and a gas-discharge opening when introducing an electrolyte solution into the exterior package.

Referring to Figs. 7 to 9, a structure on the first sealing plate 121 side and a structure on the second sealing plate 122 side will be described. Since the structure on the first sealing plate 121 side and the structure on the second sealing plate 122 side are the same, the structure on the first sealing plate 121 side will be described here.

The structure on the first sealing plate 121 side includes first sealing plate 121, a first resin member 161, negative electrode terminal 131, and two negative electrode current collectors 310. When viewed from electrode assembly 200 described later, each of two negative electrode current collectors 310 is located at a position closest to electrode assembly 200, and negative electrode terminal 131, first resin member 161, and first sealing plate 121 are disposed to be stacked in this order in a direction away from electrode assembly 200. Hence, a whole of negative electrode terminal 131 is located on the outer side with respect to negative electrode current collector 310.

Since each of two negative electrode current collectors 310 is thus located at the position closest to electrode assembly 200, it is possible to efficiently manufacture a secondary battery having a higher volume energy density as described later.

First sealing plate 121 has a substantially rectangular shape in which the Y axis direction corresponds to its short-side direction and the Z axis direction corresponds to its long-side direction. A first through hole 121h having a rectangular shape is provided at a substantially central portion of first sealing plate 121. The shape of first through hole 121h is not limited to the rectangular shape, and is preferably a shape corresponding to the shape of negative electrode terminal 131.

First resin member 161 is disposed on the inner side (the electrode assembly 200 side) with respect to first sealing plate 121, and has a substantially rectangular shape in which the Y axis direction corresponds to its short-side direction and the Z axis direction corresponds to its long-side direction. Since first resin member 161 is disposed inside first opening 111, first resin member 161 is designed to have a size smaller than the outer size of first sealing plate 121. A known resin material can be used for first resin member 161. For example, PPS (polyphenylene sulfide), PP (polypropylene), PFA (perfluoroalkoxy alkane), PTFE (polytetrafluoroethylene), or the like is preferable.

First resin member 161 includes: a first base surface 161a; a first electrode through hole 161h that has a rectangular shape and that is provided at the central portion of first base surface 161a; a first surrounding protruding wall 161W that is provided to surround first electrode through hole 161h and that protrudes to first sealing plate 121; a first peripheral wall 161b that is provided to surround the outer periphery of first base surface 161a and that protrudes to the electrode assembly 200 side; and a first rib 161r that extends in the long-side direction of first resin member 161 on the electrode assembly 200 side of first base surface 161a so as to equally divide the short-side direction of first resin member 161. First rib 161r may be provided continuously in the long-side direction or may be divided in a range from each of the short sides to the substantially central region thereof as seen from the figure.

First surrounding protruding wall 161W is located inside first through hole 121h of first sealing plate 121 and therefore functions as an insulating member between negative electrode terminal 131 and first sealing plate 121. When negative electrode terminal 131 protrudes further with respect to first through hole 121h of first sealing plate 121, first surrounding protruding wall 161W may also equivalently protrude further with respect to first through hole 121h.

Negative electrode terminal 131 has: a first protruding electrode 131a that passes through first through hole 121h and first electrode through hole 161h and that protrudes to the outside with respect to first sealing plate 121; and a first flange electrode 131b that is located on the electrode assembly 200 side with respect to first protruding electrode 131a and that extends outward in the form of a rectangle when viewed in a plan view.

Each of negative electrode current collectors 310 has a rectangular shape such that negative electrode current collector 310 is accommodated in a rectangular region surrounded by first peripheral wall 161b and first rib 161r on the electrode assembly 200 side of first resin member 161. Negative electrode current collector 310 has a first region 310a and second regions 310b, and first region 310a is disposed at a position close to electrode assembly 200 with respect to each second region 310b in a direction perpendicular to first sealing plate 121. A stepped portion 310c is provided between first region 310a and second region 310b. Since stepped portion 310c is provided and negative electrode tab group 210A described later is connected to first region 310a close to the electrode assembly 200 side, space saving can be achieved, thereby improving efficiency of mounting of electrode assembly 200.

As shown in Fig. 7, negative electrode terminal 131 and negative electrode current collector 310 are connected by welding portions L1. Each of welding portions L1 extends through negative electrode terminal 131, and welding portion L1 is provided in negative electrode terminal 131 at a region on the outer side (side farther away from electrode assembly 200) with respect to negative electrode current collector 310. Welding portion L1 is provided in the form of a line along the short-side direction.

Here, welding portion L1 is preferably formed by a molten-solidified portion (melted and solidified metal), a weld nugget, or the like, and a welding method of externally applying an energy ray, such as laser welding, is employed, for example. Welding portion L1 is not provided at an outer peripheral edge portion of first flange electrode 131b of negative electrode terminal 131 but is provided at a portion away from the outer peripheral edge (on the first protruding electrode 131a side).

First sealing plate 121 and first resin member 161 are joined to each other. First sealing plate 121 and first resin member 161 are connected to each other using a well-known technology such as resin molding or adhesion. Negative electrode terminal 131 and first resin member 161 are joined to each other. Negative electrode terminal 131 and first resin member 161 are connected to each other using a well-known technology such as resin molding or adhesion.

Here, in order to secure each of airtightness between first sealing plate 121 and first resin member 161 and airtightness between negative electrode terminal 131 and first resin member 161, surface treatment for improving airtightness is preferably performed onto a region at which they are in contact with each other. The region at which they are in contact with each other is each of a peripheral region A1 and a peripheral region A2 shown in Fig. 7. Examples of the surface treatment include methods such as chemical etching, laser processing, blasting, coupling treatment, and the like.

Electrode assembly 200 is an electrode assembly having a flat shape and having a below-described positive electrode plate and a below-described negative electrode plate. Specifically, electrode assembly 200 is a wound type electrode assembly in which a strip-shaped positive electrode plate and a strip-shaped negative electrode plate are both wound with a strip-shaped separator (not shown) being interposed therebetween. It should be noted that in the present specification, the "electrode assembly" is not limited to the wound type electrode assembly, and may be a stacked type electrode assembly in which a plurality of positive electrode plates and a plurality of negative electrode plates are alternately stacked. The electrode assembly may include a plurality of positive electrode plates and a plurality of negative electrode plates, respective positive electrode tabs provided in the positive electrode plates may be stacked to form a positive electrode tab group, and respective negative electrode tabs provided in the negative electrode plates may be stacked to form a negative electrode tab group.

As shown in Fig. 8, exterior package 100 accommodates electrode assembly 200. Electrode assembly 200 is accommodated in exterior package 100 such that the winding axis thereof is parallel to the X axis direction.

Specifically, one or a plurality of the wound type electrode assemblies and an electrolyte solution (electrolyte) (not shown) are accommodated inside a below-described sheet 600 (electrode assembly holder) having an insulating property and disposed in exterior package 100. As the electrolyte solution (non-aqueous electrolyte solution), it is possible to use, for example, a solution obtained by dissolving LiPF₆ at a concentration of 1.2 mol/L in a non-aqueous solvent obtained by mixing ethylene carbonate (EC), ethyl methyl carbonate (EMC), and diethyl carbonate (DEC) at a volume ratio (25°C) of 30:30:40. It should be noted that instead of the electrolyte solution, a solid electrolyte may be used.

Electrode assembly 200 includes: a negative electrode tab group 210A (first electrode tab group) provided at an end portion (first end portion) thereof on the first sealing plate 121 side; and a positive electrode tab group 220A (second electrode tab group) provided at an end portion (second end portion) thereof on the second sealing plate 122 side. Negative electrode tab group 210A and positive electrode tab group 220A are connected to the negative electrode and positive electrode of electrode assembly 200, respectively. Negative electrode tab group 210A and positive electrode tab group 220A are formed to protrude from a main body portion of electrode assembly 200 toward first sealing plate 121 and second sealing plate 122.

Current collectors 300 include negative electrode current collector 310 (first current collector) and a positive electrode current collector 320 (second current collector). Each of negative electrode current collector 310 and positive electrode current collector 320 is constituted of a plate-shaped member as described above. Electrode assembly 200 is electrically connected to negative electrode terminal 131 and positive electrode terminal 132 through current collectors 300.

Negative electrode current collector 310 is provided on first sealing plate 121. Negative electrode current collector 310 is electrically connected to negative electrode tab group 210A and negative electrode terminal 131. Negative electrode current collector 310 is composed of a conductive material (more specifically, a metal), and can be composed of copper, a copper alloy, or the like, for example.

The structure on the first sealing plate 121 side includes first sealing plate 121, first resin member 161, negative electrode terminal 131, and two negative electrode current collectors 310. When viewed from electrode assembly 200 described later, each of two negative electrode current collectors 310 is located at the position closest to electrode assembly 200, and negative electrode terminal 131, first resin member 161, and first sealing plate 121 are disposed to be stacked in this order in the direction away from electrode assembly 200. Thus, the whole of negative electrode terminal 131 is located on the outer side with respect to negative electrode current collector 310.

It should be noted that since the structure on the second sealing plate 122 side is the same as the structure on the first sealing plate 121 side, first resin member 161, negative electrode terminal 131, and negative electrode current collector 310 on the first sealing plate 121 side can be replaced with second resin member 162, positive electrode terminal 132, and positive electrode current collector 320 as the structure on the second sealing plate 122 side in Fig. 7.

### (Configuration of Electrode Assembly 200)

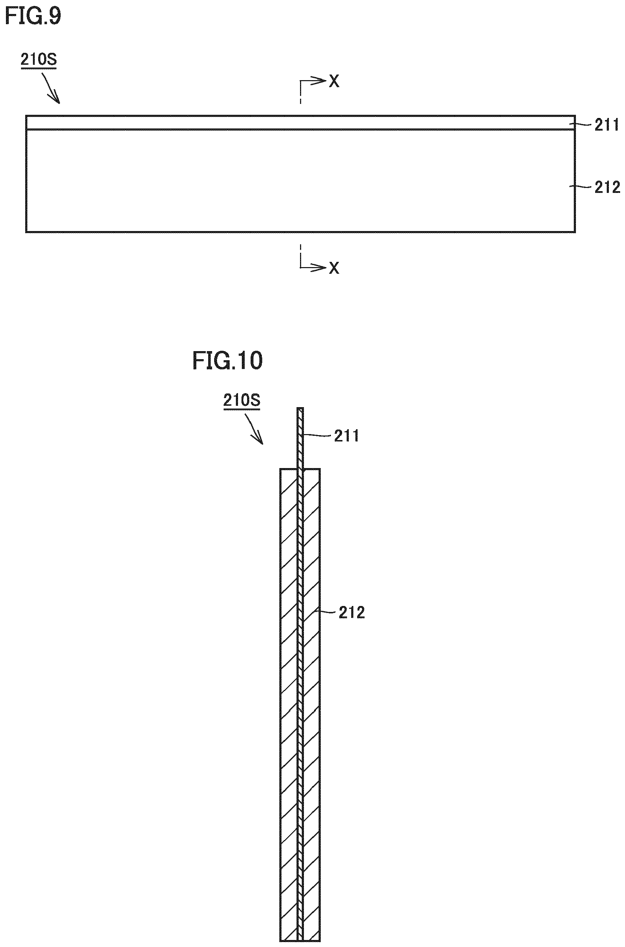

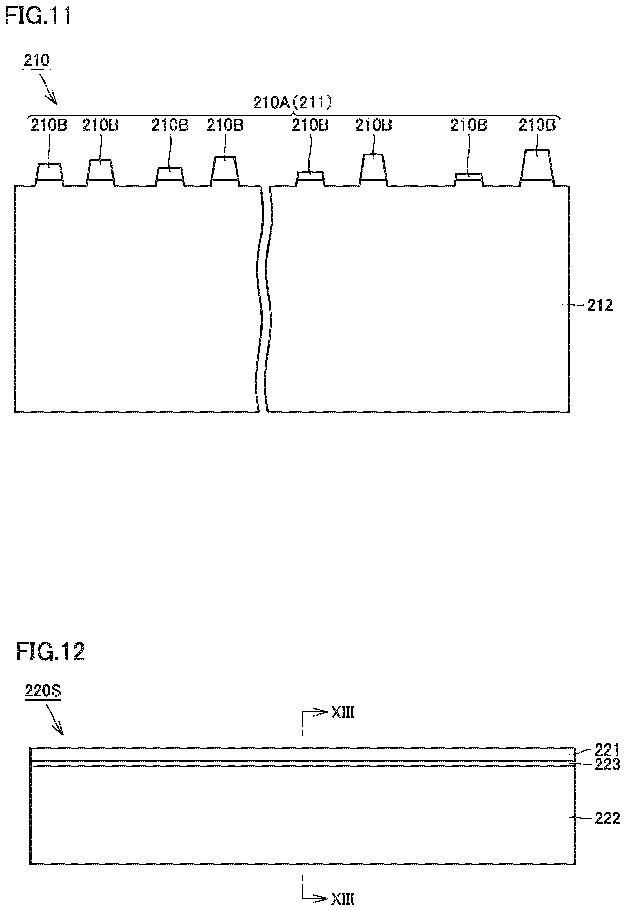

Fig. 9 is a front view showing a negative electrode raw plate 210S before negative electrode plate 210 (first electrode) is formed, Fig. 10 is a cross sectional view of negative electrode raw plate 210S shown in Fig. 9 along X-X, and Fig. 11 is a front view showing negative electrode plate 210 formed from negative electrode raw plate 210S.

Negative electrode plate 210 is manufactured by processing negative electrode raw plate 210S. As shown in Figs. 9 and 10, negative electrode raw plate 210S includes a negative electrode core body 211 and a negative electrode active material layer 212. Negative electrode core body 211 is a copper foil or a copper alloy foil.

Negative electrode active material layer 212 is formed on negative electrode core body 211 except for each of end portions of both surfaces of negative electrode core body 211 on one side. Negative electrode active material layer 212 is formed by applying a negative electrode active material layer slurry using a die coater.

The negative electrode active material layer slurry is produced by kneading graphite serving as a negative electrode active material, styrene-butadiene rubber (SBR) and carboxymethyl cellulose (CMC) each serving as a binder, and water serving as a dispersion medium such that the mass ratio of the graphite, the SBR, and the CMC is about 98:1:1.

Negative electrode core body 211 having the negative electrode active material layer slurry applied thereon is dried to remove the water included in the negative electrode active material layer slurry, thereby forming negative electrode active material layer 212. Further, by compressing negative electrode active material layer 212, negative electrode raw plate 210S including negative electrode core body 211 and negative electrode active material layer 212 is formed. Negative electrode raw plate 210S is cut into a predetermined shape, thereby forming negative electrode plate 210. Negative electrode raw plate 210S can be cut by laser processing with application of an energy ray, die processing, cutter processing, or the like.

As shown in Fig. 11, a plurality of negative electrode tabs 210B each constituted of negative electrode core body 211 are provided at one end portion, in the width direction, of negative electrode plate 210 formed from negative electrode raw plate 210S. When negative electrode plate 210 is wound, the plurality of negative electrode tabs 210B are stacked to form negative electrode tab group 210A. The position of each of the plurality of negative electrode tabs 210B and the length thereof in the protruding direction are appropriately adjusted in consideration of the state in which negative electrode tab group 210A is connected to negative electrode current collector 310. It should be noted that the shape of negative electrode tab 210B is not limited to the one illustrated in Fig. 11.

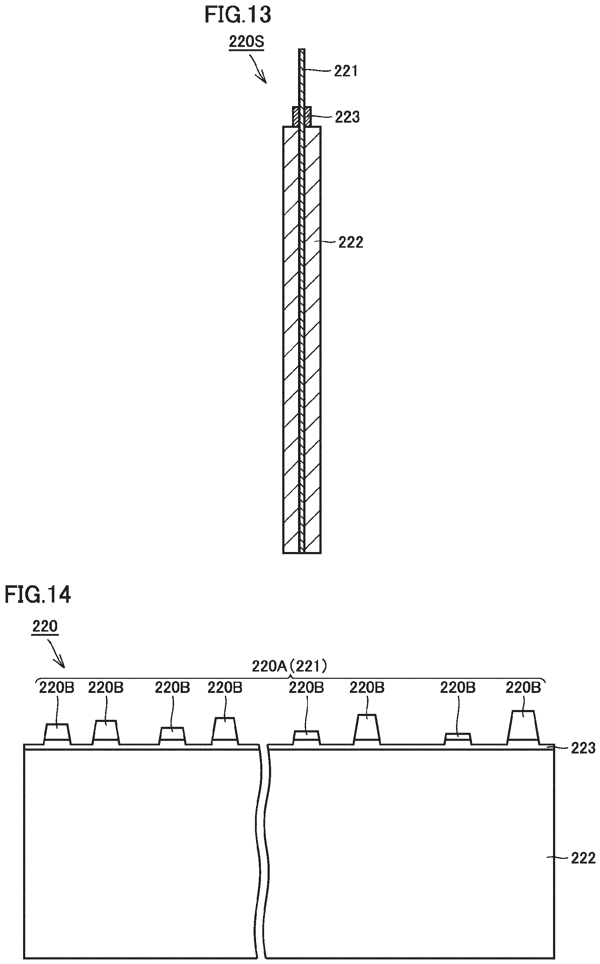

Fig. 12 is a front view showing a positive electrode raw plate 220S before positive electrode plate 220 (second electrode) is formed, Fig. 13 is a cross sectional view of positive electrode raw plate 220S shown in Fig. 12 along XIII-XIII, and Fig. 13 is a front view showing positive electrode plate 220 formed from positive electrode raw plate 220S.

Positive electrode plate 220 is manufactured by processing positive electrode raw plate 220S. As shown in Figs. 12 and 13, positive electrode raw plate 220S includes a positive electrode core body 221, a positive electrode active material layer 222, and a positive electrode protective layer 223. Positive electrode core body 221 is an aluminum foil or an aluminum alloy foil.

Positive electrode active material layer 222 is formed on positive electrode core body 221 except for each of end portions of both surfaces of positive electrode core body 221 on one side. Positive electrode active material layer 222 is formed on positive electrode core body 221 by applying a positive electrode active material layer slurry using a die coater.

The positive electrode active material layer slurry is produced by kneading a lithium-nickel-cobalt-manganese composite oxide serving as a positive electrode active material, polyvinylidene difluoride (PVdF) serving as a binder, a carbon material serving as a conductive material, and N-methyl-2-pyrrolidone (NMP) serving as a dispersion medium such that the mass ratio of the lithium-nickel-cobalt-manganese composite oxide, the PVdF, and the carbon material is about 97.5:1:1.5.

Positive electrode protective layer 223 is formed in contact with positive electrode core body 221 at an end portion of positive electrode active material layer 222 on the one side in the width direction. Positive electrode protective layer 223 is formed on positive electrode core body 221 by applying a positive electrode protective layer slurry using a die coater. Positive electrode protective layer 223 has an electrical resistance larger than that of positive electrode active material layer 222.

The positive electrode protective layer slurry is produced by kneading alumina powder, a carbon material serving as a conductive material, PVdF serving as a binder, and NMP serving as a dispersion medium such that the mass ratio of the alumina powder, the carbon material, and the PVdF is about 83:3:14.

Positive electrode core body 221 having the positive electrode active material layer slurry and the positive electrode protective layer slurry applied thereon is dried to remove the NMP included in the positive electrode active material layer slurry and the positive electrode protective layer slurry, thereby forming positive electrode active material layer 222 and positive electrode protective layer 223. Further, by compressing positive electrode active material layer 222, positive electrode raw plate 220S including positive electrode core body 221, positive electrode active material layer 222, and positive electrode protective layer 223 is formed. Positive electrode raw plate 220S is cut into a predetermined shape, thereby forming positive electrode plate 220. Positive electrode raw plate 220S can be cut by laser processing with application of an energy ray, die processing, cutter processing, or the like.

As shown in Fig. 14, a plurality of positive electrode tabs 220B each constituted of positive electrode core body 221 are provided at one end portion, in the width direction, of positive electrode plate 220 formed from positive electrode raw plate 220S. When positive electrode plate 220 is wound, the plurality of positive electrode tabs 220B are stacked to form positive electrode tab group 220A. The position of each of the plurality of positive electrode tabs 220B and the length thereof in the protruding direction are appropriately adjusted in consideration of the state in which positive electrode tab group 220A is connected to positive electrode current collector 320. It should be noted that the shape of positive electrode tab 220B is not limited to the one illustrated in Fig. 14.

Positive electrode protective layer 223 is provided at the root of each of the plurality of positive electrode tabs 220B. Positive electrode protective layer 223 may not necessarily be provided at the root of positive electrode tab 220B.

In a typical example, the thickness of (one) negative electrode tab 210B is smaller than the thickness of (one) positive electrode tab 220B. In this case, the thickness of negative electrode tab group 210A is smaller than the thickness of positive electrode tab group 220A.

### (Connection Structure between Electrode Assembly 200 and Current Collector 300)

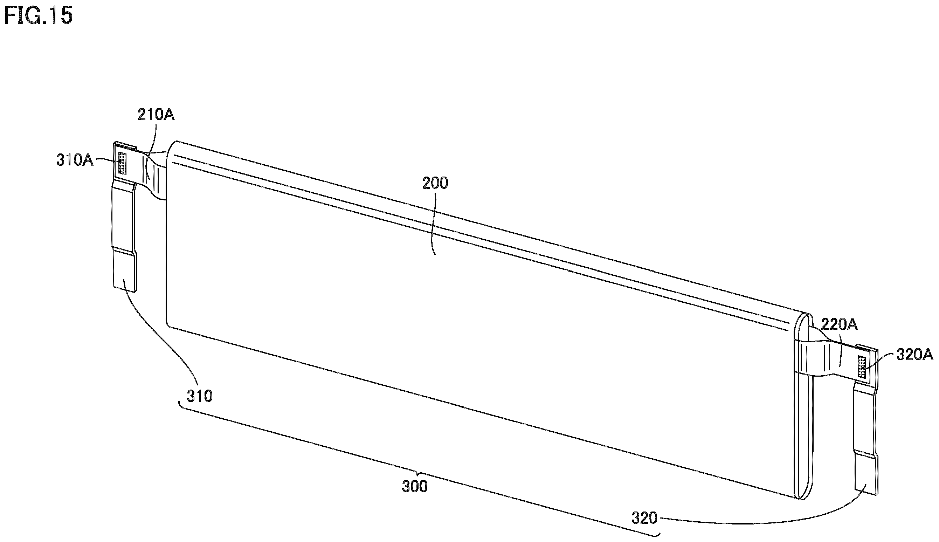

Fig. 15 is a diagram showing electrode assembly 200 and current collector 300 each removed from secondary battery 1. As shown in Fig. 15, electrode assembly 200 is provided with a negative electrode tab group 210A at one end portion of electrode assembly 200 and a positive electrode tab group 220A at the other end portion of electrode assembly 200. This electrode assembly 200 represents one wound type electrode assembly, but may be constituted of two or more wound type electrode assemblies, or may be constituted of a stacked type electrode assembly.

Negative electrode tab group 210A is joined to negative electrode current collector 310 at a joining portion 310A and positive electrode tab group 220A is joined to positive electrode current collector 320 at a joining portion 320A. Each of joining portions 310A, 320A can be formed by, for example, ultrasonic bonding, resistance welding, laser welding, swaging, or the like.

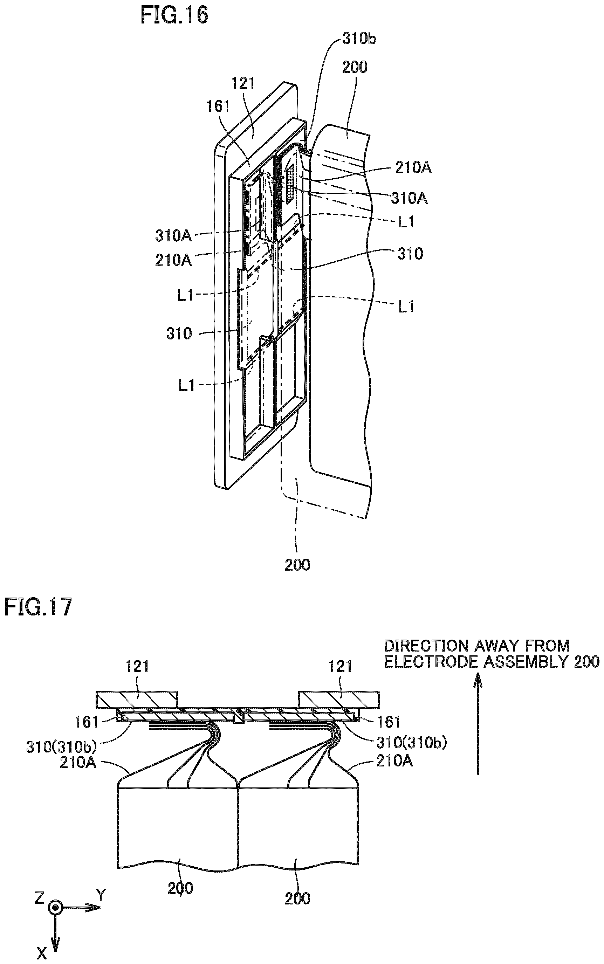

Each of Figs. 16 and 17 is a diagram showing a connection structure between negative electrode tab group 210A and negative electrode current collector 310. In each of the figures, two electrode assemblies 200 are provided, and negative electrode tab groups 210A thereof are joined to second regions 310b of negative electrode current collectors 310. Further, welding portions L1 are formed in negative electrode current collectors 310 by a welding method of externally applying an energy ray such as laser welding, thereby fixing negative electrode current collectors 310 to negative electrode terminal 131 (see Fig. 7).

As shown in Fig. 17, each negative electrode tab group 210A is connected to second region 310b of negative electrode current collector 310 with negative electrode tab group 210A being folded when accommodated in case main body 110. A joining surface between negative electrode current collector 310 and second region 310b is disposed in a direction along first sealing plate 121. With such a configuration, space saving of the current collector portion can be achieved, thereby obtaining a secondary battery having a higher volume energy density. It should be noted that when the joining surface is disposed in the direction along first sealing plate 121, negative electrode tab group 210A is preferably parallel to second region 310b, but negative electrode tab group 210A may not be strictly parallel thereto and may be inclined in a range of, for example, about ±45°.

Each of Figs. 16 and 17 shows the connection structure on the negative electrode side; however, the basic connection structure on the positive electrode side is the same as that on the negative electrode side.

### (Step of Inserting Electrode Assembly 200)

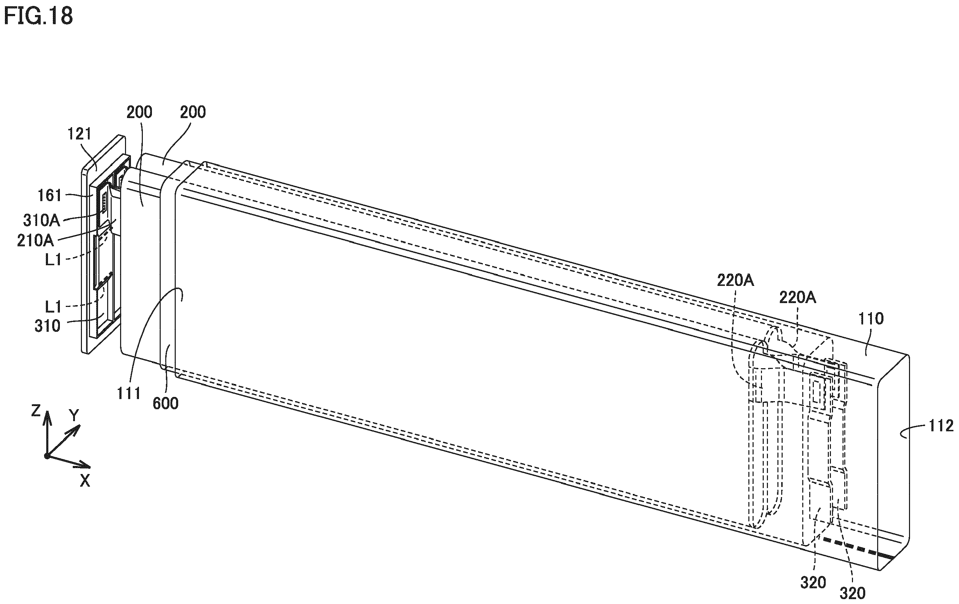

Fig. 18 is a diagram showing a step of inserting electrode assembly 200 into case main body 110. As shown in Fig. 18, sheet 600 (electrode assembly holder) composed of a resin is disposed between electrode assembly 200 and case main body 110.

Sheet 600 may be composed of, for example, a resin. More specifically, the material of sheet 600 is, for example, polypropylene (PP), polyethylene terephthalate (PET), polyphenylene sulfide (PPS), polyimide (PI), or polyolefin (PO).

Sheet 600 does not necessarily need to cover a whole of the surfaces of electrode assembly 200. Sheet 600 preferably covers an area of about 50% or more, more preferably about 70% or more, of the outer surfaces of the electrode assembly. Sheet 600 preferably covers a whole of at least four surfaces of the six surfaces of electrode assembly 200 having a substantially rectangular parallelepiped shape (flat shape) other than the two surfaces thereof on which negative electrode tab group 210A and positive electrode tab group 220A are formed respectively.

It should be noted that although not shown in the figure, a spacer may be disposed to maintain a certain space between first sealing plate 121 and electrode assembly 200. The same applies to a space between second sealing plate 122 and electrode assembly 200.

In a method of manufacturing secondary battery 1 according to the present embodiment, negative electrode tab group 210A of electrode assembly 200 is joined to second region 310b of negative electrode current collector 310. Next, electrode assembly 200 is inserted to a predetermined position of case main body 110 via first opening 111 from its end portion side on the positive electrode tab group 220A side.

Next, an assembly including first sealing plate 121, first resin member 161, and negative electrode terminal 131 is pressed against negative electrode current collector 310, and negative electrode terminal 131 and negative electrode current collector 310 are welded to each other, thereby forming welding portions L1 (see Fig. 7).

For the welding, ultrasonic welding, resistance welding, laser welding, or the like is used.

A joining surface between negative electrode tab group 210A and second region 310b of negative electrode current collector 310 is preferably bent in the direction along (parallel to) first sealing plate 121 after being assembled as a secondary battery. The joining surface may not be bent strictly in the direction and may be inclined in the range of, for example, about ±45°. Finally, as shown in Fig. 17, negative electrode current collector 310 is preferably pressed to the negative electrode terminal 131 side by elasticity of negative electrode tab group 210A due to negative electrode tab group 210A being bent.

Next, first sealing plate 121 is welded to first opening 111 of case main body 110 with electrode assembly 200 of negative electrode tab group 210A being disposed in case main body 110.

The welding is performed from the outside of first sealing plate 121 by a welding method of applying an energy ray such as laser welding, for example.

When there are a plurality of negative electrode tab groups 210A, the bending directions of negative electrode tab groups 210A do not necessarily need to be the same as shown in Fig. 17. In order to maintain a certain space between first sealing plate 121 and electrode assembly 200, a spacer may be disposed. On this occasion, negative electrode tab group 210A may be located inside the spacer.

As with negative electrode tab group 210A, positive electrode tab group 220A is also joined to second region 320b of positive electrode current collector 320, an assembly including second sealing plate 122, second resin member 162, and positive electrode terminal 132 is pressed against positive electrode current collector 320, and positive electrode terminal 132 and positive electrode current collector 320 are welded to each other, thereby forming the welding portions.

The step of inserting electrode assembly 200 is not limited to pushing electrode assembly 200 from the first opening 111 side, and may be performed by, for example, pulling electrode assembly 200 from the second opening 112 side.

### (Manufacturing Process for Secondary Battery 1)

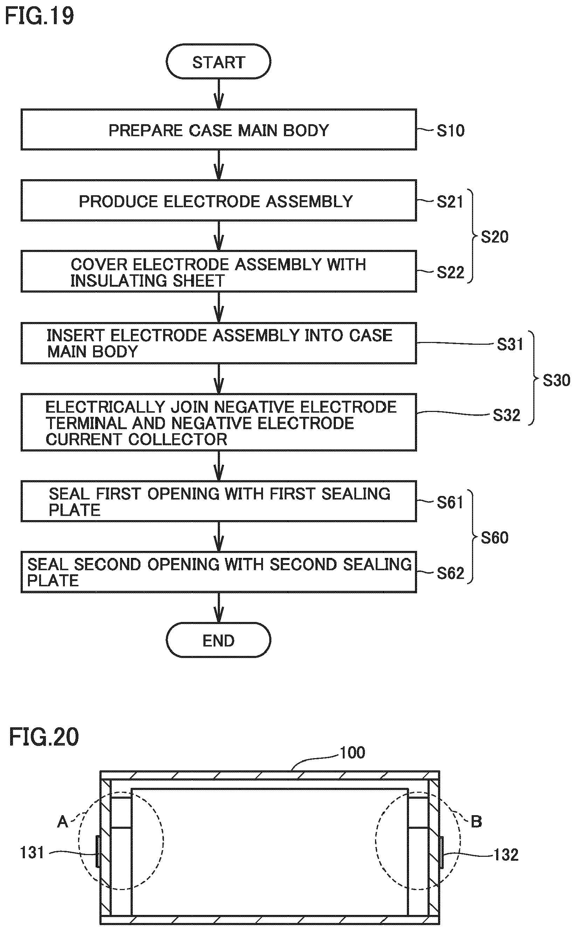

Fig. 19 is a flowchart showing each step of the method of manufacturing secondary battery 1. As shown in Fig. 19, in S10, case main body 110 is prepared. Next, in S20, electrode assembly 200 is produced (S21), and then electrode assembly 200 is covered with sheet 600 (S22). In S30, electrode assembly 200 is inserted into case main body 110 (S31).

Next, welding portions L1 are provided by a welding method of applying an energy ray from the outside of first opening 111 such as laser welding, thereby electrically joining negative electrode terminal 131 and negative electrode current collector 310 (S32). Positive electrode terminal 132 and positive electrode current collector 320 are electrically joined to each other in the same manner on the second sealing plate 122 side.

Next, in S60, first opening 111 and second opening 112 are sealed with first sealing plate 121 and second sealing plate 122. Each of the steps of sealing with first sealing plate 121 and second sealing plate 122 is performed by, for example, laser welding. It should be noted that first opening 111 and second opening 112 may be sealed with first sealing plate 121 and second sealing plate 122 (S60) before the step (S32) of electrically joining negative electrode terminal 131 and negative electrode current collector 310 and the step of electrically connecting positive electrode terminal 132 and positive electrode current collector 320.

The step (S61) of sealing first opening 111 with first sealing plate 121 on the negative electrode side may be performed before or after the step (S32) of inserting electrode assembly 200 into case main body 110.

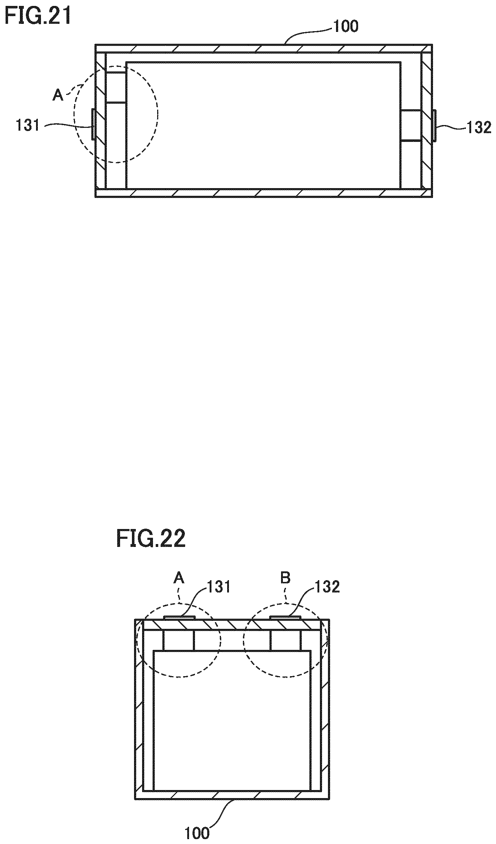

It should be noted that as described above, the structure applied to the negative electrode side in the present disclosure can also be applied to the positive electrode side. Further, regarding the configuration employed in secondary battery 1, it has been illustratively described that negative electrode terminal 131 is provided on one end surface of exterior package 100, positive electrode terminal 132 is provided on the other end surface, and the structure shown in Fig. 7 is employed for each terminal structure as shown in Fig. 20; however, the configuration of the present disclosure may be employed only for the one end surface (region surrounded by A in Fig. 21) of exterior package 100 and a known connection structure may be employed for the other end surface thereof as shown in Fig. 21, for example.

Further, as shown in Fig. 22, when negative electrode terminal 131 and positive electrode terminal 132 are provided on one surface of the secondary battery as an embodiment of the secondary battery, the configuration of the present disclosure can be employed (regions surrounded by A and B in Fig. 22).

### (Summary)

The above-described contents of secondary battery 1 and the method of manufacturing secondary battery 1 according to the present embodiment are summarized as follows.

This secondary battery 1 includes: electrode assembly 200 including negative electrode raw plate 210S and positive electrode raw plate 220S having a polarity different from a polarity of negative electrode raw plate 210S; and exterior package 100 that accommodates electrode assembly 200 and the electrolyte, wherein exterior package 100 includes case main body 110 provided with first opening 111 at one end portion of exterior package 100 and first sealing plate 121 that seals first opening 111, electrode assembly 200 has negative electrode tab group 210A located at one end portion of electrode assembly 200 and including a plurality of negative electrode tabs 210B provided at negative electrode raw plate 210S, negative electrode current collector 310 is connected to negative electrode tab group 210A, negative electrode terminal 131 is connected to negative electrode current collector 310, first resin member 161 is disposed between negative electrode terminal 131 and first sealing plate 121, negative electrode terminal 131 and negative electrode current collector 310 are connected to each other by welding portion L1, welding portion L1 extends through negative electrode terminal 131, and welding portion L1 is provided in negative electrode terminal 131 at a region on an outer side, which is a side farther away from electrode assembly 200, with respect to negative electrode current collector 310.

With this configuration, negative electrode terminal 131 and negative electrode tab group 210A can be electrically joined to each other with electrode assembly 200 being disposed in case main body 110. As a result, a secondary battery having a higher volume energy density can be manufactured efficiently.

In secondary battery 1 according to an example, first sealing plate 121 and first resin member 161 are joined to each other. In secondary battery 1 according to an example, negative electrode terminal 131 and the first resin member are joined to each other. With this configuration, a secondary battery having a higher volume energy density can be manufactured more efficiently.

In secondary battery 1 according to an example, negative electrode tab group 210A is connected to negative electrode current collector 310 with negative electrode tab group 210A being folded, and the joining surface between negative electrode tab group 210A and negative electrode current collector 310 is disposed in the direction along first sealing plate 121. With this configuration, space saving of the current collector portion can be achieved, thereby obtaining a secondary battery having a higher volume energy density.

In secondary battery 1 according to an example, negative electrode current collector 310 has first region 310a and second region 310b, in the direction perpendicular to first sealing plate 121, first region 310a is disposed at a position close to electrode assembly 200 with respect to second region 310b, negative electrode terminal 131 is connected to first region 310a, and negative electrode tab group 210A is connected to second region 310b. With this configuration, a secondary battery having a higher volume energy density can be obtained. A plurality of negative electrode current collectors 310 may be used, a plurality of negative electrode tab groups 210A may be provided, and the plurality of negative electrode tab groups 210A may be joined to different negative electrode current collectors 310 respectively. It should be noted that a plurality of negative electrode tab groups 210A may be provided, and may be respectively joined to different portions of one negative electrode current collector 310.

In secondary battery 1 according to an example, negative electrode terminal 131 includes the first metal region composed of the first metal and the second metal region composed of the second metal different from the first metal.

The method of manufacturing secondary battery 1 having any of the configurations described above includes: disposing electrode assembly 200 in case main body 110 to close first opening 111 with first sealing plate 121; and welding negative electrode terminal 131 and negative electrode current collector 310 to which negative electrode tab group 210A is connected, by externally applying an energy ray to negative electrode terminal 131.

In the method of manufacturing the secondary battery according to an example, the welding includes preparing an assembly 700 in which first sealing plate 121 and first resin member 161 are joined to each other and first resin member 161 and negative electrode terminal 131 are joined to each other, wherein negative electrode terminal 131 and negative electrode current collector 310 are welded to each other using assembly 700. By preparing assembly 700 in advance in this way, fixation can be achieved by joining the members unlike the conventional practice in which each component is fixed by swaging of the terminal. As a result, there can be stably and efficiently manufactured a secondary battery having a high volume energy density with the space of the current collector portion being reduced.

### (Functions and Effects)

According to the secondary battery and the method of manufacturing the secondary battery in the present embodiment, it is possible to efficiently manufacture the secondary battery and improve the reliability of the joining portion of each component as described above.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A secondary battery comprising:
an electrode assembly (200) including a first electrode (210) and a second electrode (220) having a polarity different from a polarity of the first electrode (210); and
an exterior package (100) that accommodates the electrode assembly (200) and an electrolyte, wherein
the exterior package (100) includes
a case main body (110) provided with a first opening (111) at one end portion of the exterior package (100), and
a first sealing plate (121) that seals the first opening (111),
the electrode assembly (200) has a first electrode tab group (210A) located at one end portion of the electrode assembly (200) and including a plurality of first electrode tabs (210B) provided at the first electrode (210),
a first electrode current collector member (310) is connected to the first electrode tab group (210A),
a first electrode terminal (131) is connected to the first electrode current collector member (310),
a first resin member (161) is disposed between the first electrode terminal (131) and the first sealing plate (121),
the first electrode terminal (131) and the first electrode current collector member (310) are connected to each other by a welding portion (L1),
the welding portion (L1) extends through the first electrode terminal (131), and
the welding portion (L1) is provided in the first electrode terminal (131) at a region on an outer side with respect to the first electrode current collector member (310).

2. The secondary battery according to claim 1, wherein the first sealing plate (121) and the first resin member (161) are joined to each other.

3. The secondary battery according to claim 1 or 2, wherein the first electrode terminal (131) and the first resin member (161) are joined to each other.

4. The secondary battery according to any one of claims 1 to 3, wherein
the first electrode tab group (210A) is connected to the first electrode current collector member (310) with the first electrode tab group (210A) being folded, and
a joining surface between the first electrode tab group (210A) and the first electrode current collector member (310) is disposed in a direction along the first sealing plate (121).

5. The secondary battery according to any one of claims 1 to 4, wherein
the first electrode current collector member (310) has a first region (3 10a) and a second region (310b),
in a direction perpendicular to the first sealing plate (121), the first region (310a) is disposed at a position close to the electrode assembly (200) with respect to the second region (310b),
the first electrode terminal (131) is connected to the first region (310a), and
the first electrode tab group (210A) is connected to the second region (310b).

6. The secondary battery according to any one of claims 1 to 5, wherein the first electrode terminal (131) includes a first metal region composed of a first metal and a second metal region composed of a second metal different from the first metal.

7. A method of manufacturing a secondary battery, the secondary battery comprising:
an electrode assembly (200) including a first electrode (210) and a second electrode (220) having a polarity different from a polarity of the first electrode (210); and
an exterior package (100) that accommodates the electrode assembly (200) and an electrolyte, wherein
the exterior package (100) includes
a case main body (110) provided with a first opening (111) at one end portion of the exterior package (100), and
a first sealing plate (121) that seals the first opening (111),
the electrode assembly (200) has a first electrode tab group (210A) located at one end portion of the electrode assembly (200) and including a plurality of first electrode tabs (210B) provided at the first electrode (210),
a first electrode current collector member (310) is connected to the first electrode tab group (210A),
a first electrode terminal (131) is connected to the first electrode current collector member (310),
a first resin member (161) is disposed between the first electrode terminal (131) and the first sealing plate (121),
the first electrode terminal (131) and the first electrode current collector member (310) are connected to each other by a welding portion (L1),
the welding portion (L1) extends through the first electrode terminal (131), and
the welding portion (L1) is provided in the first electrode terminal (131) at a region on an outer side with respect to the first electrode current collector member (310),
the method comprising:
disposing the electrode assembly (200) in the case main body (110) to close the first opening (111) with the first sealing plate (121); and
welding the first electrode terminal (131) and the first electrode current collector member (310) to which the first electrode tab group (210A) is connected, by externally applying an energy ray to the first electrode terminal (131).

8. The method of manufacturing the secondary battery according to claim 7, wherein the welding includes welding the first electrode terminal (131) and the first electrode current collector member (310) by pressing, against the first electrode current collector member (310), an assembly including the first sealing plate (121), the first resin member (161), and the first electrode terminal (131).
